# EUROPEAN PATENT SPECIFICATION

(11) **EP 3 118 445 B1**
(45) Date of publication and mention of the grant of the patent: **18.12.2019**
(21) Application number: 15761647.5
(22) Date of filing: 20.01.2015
(51) Int. Cl.: F02N 11/08, H02J 1/10, B60L 1/00, B60R 16/03, B60L 58/20, H02J 1/00

(54) **ENGINE STARTING DEVICE**
MOTORSTARTVORRICHTUNG
DISPOSITIF DE DÉMARRAGE DE MOTEUR À COMBUSTION

(30) Priority: 13.03.2014 JP 2014049640
(43) Date of publication of application: 18.01.2017
(73) Proprietor: Panasonic Intellectual Property Management Co., Ltd., Osaka-shi, Osaka 570-6207 (JP)
(72) Inventor: YUKAWA, Junichi, Osaka-shi, Osaka 540-6207 (JP); WATANABE, Hisazumi, Osaka-shi, Osaka 540-6207 (JP)
(74) Representative: Vigand, Philippe
(86) International application number: PCT/JP2015/000211
(87) International publication number: WO 2015/136826

(56) References cited:
- WO-A1-2004/042888
- DE-A1-102004 044 469
- DE-A1-102007 026 164
- DE-A1-102009 027 931
- FR-A1- 2 829 632
- JP-A- H06 299 937
- JP-A- 2004 116 296
- JP-A- 2005 248 744
- US-A1- 2012 025 601
- US-B1- 7 319 306

## Description

### TECHNICAL FIELD

The present invention relates to an engine starting device of a double-power source type.

### BACKGROUND ART

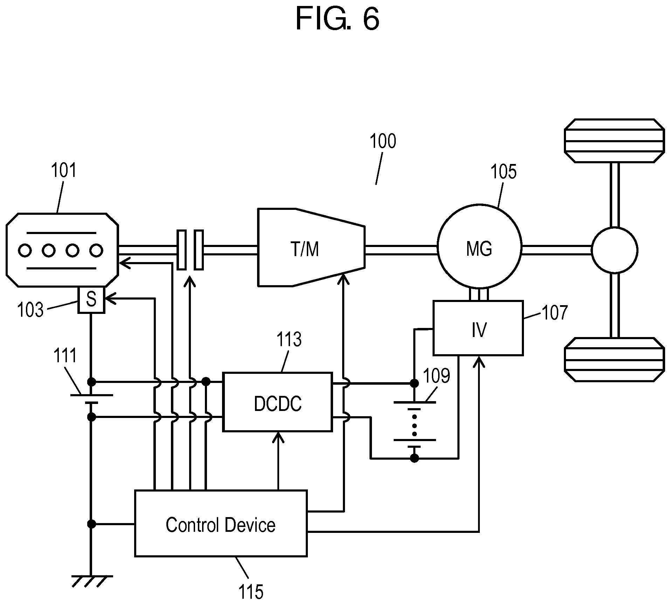

FIG. 6 is a schematic diagram of a control device for vehicle including conventional engine starting device 100 of dual power source type disclosed in PTL 1.

Starter 103 for rotating a rotation shaft initially is mechanically connected to a rotation shaft (a crankshaft) of engine 101. Motor generator 105 exchanges electric power via inverter 107 with high-voltage battery 109 having a terminal voltage which becomes a predetermined high voltage. On the other hand, starter 103 is driven by low-voltage battery 111 which has a terminal voltage lower than that of high-voltage battery 109, serving as an electric power source. The electric power of high-voltage battery 109 can be supplied to low-voltage battery 111 via a step-down converter (DC/DC converter 113) of an insulated type. Control device 115 controls a control amount of an in-vehicle main machine.

An operation of engine starting device 100 for starting up engine 101 will be described below. The rotation speed of starter 103 decreases as a temperature of engine 101 or a temperature of low-voltage battery 111 decreases. In this case, engine 101 may hardly start up. Control device 115 causes DC/DC converter 113 to generate a voltage applied to starter 103, and makes the voltage applied to starter 103 variable, thereby controlling the rotation speed of starter 103 to be constant not depending on environmental factors, such as a temperature.

PTL2 discloses all the preamble of claim 1.

### CITATION LIST

### PATENT LITERATURE

PTL 1: Japanese Patent No. 5263078
PTL2: US 7 319 306 B1

### SUMMARY

An engine starting device includes a high-voltage power storage unit, a DC/DC converter electrically connected to the high-voltage power storage unit, a first switch electrically connected to the DC/DC converter, a second switch electrically connected to the first switch at a node, a low-voltage power storage unit electrically connected to the second switch, a starter configured to start up the engine, and a controller. The controller is configured to, for starting up the starter, control the DC/DC converter to allow the DC/DC converter to output electric power of the high-voltage power storage unit to the starter and to start rotating the starter at a certain time point by turning on the first switch while turning off the second switch. The controller is configured to, when a predetermined duration elapses from the certain time point or a rotation speed of the starter reaches a predetermined rotation speed, control the second switch to supply electric power of the low-voltage power storage unit to the starter together with the electric power of the high-voltage power storage unit by turning on the second switch. The controller is configured to turn off the first switch and the second switch when the engine completely starts up, characterized in that the controller is further configured to increase an output voltage of the DC/DC converter with respect to time when the first switch is turned on while the second switch is turned off.

Even if a small-sized DC/DC converter is employed, the engine starting device can start up the engine by driving the starter.

### BRIEF DESCRIPTION OF DRAWINGS

FIG. 1 is a schematic view of an engine starting device in accordance with Exemplary Embodiment 1.
FIG. 2 is a circuit block diagram of the engine starting device in Embodiment 1.
FIG. 3 shows an output voltage of a DC/DC converter, an output of a low-voltage power storage unit, and a rotation speed of a starter in an operation of the engine starting device in accordance with Embodiment 1.
FIG. 4 shows an output voltage of the DC/DC converter, an output of the low-voltage power storage unit, and a rotation speed of the starter in another operation of the engine starting device in accordance with Embodiment 1.
FIG. 5 is a circuit block diagram of an engine starting device in accordance with Embodiment 2.
FIG. 6 is a schematic view of a conventional control device for vehicles.

### DETAIL DESCRIPTION OF PREFERRED EMBODIMENTS

### EXEMPLARY EMBODIMENT 1

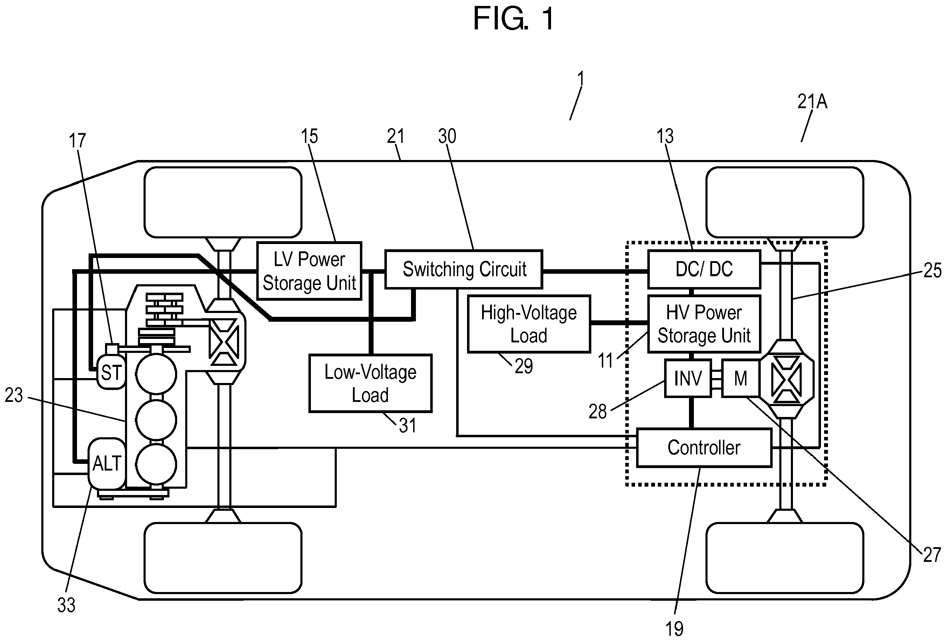

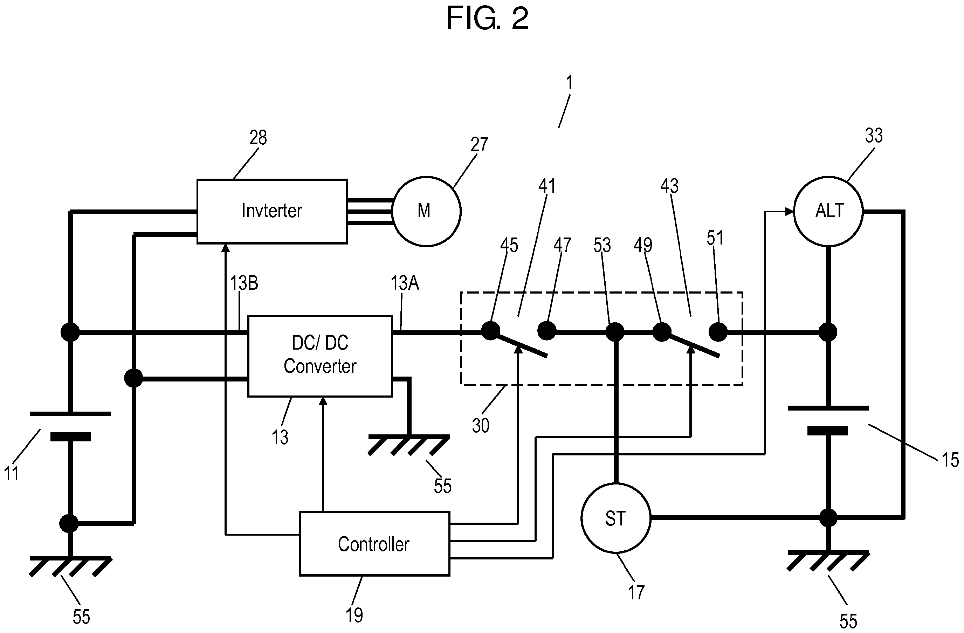

FIGS. 1 and 2 are a schematic view and a circuit block diagram of engine starting device 1 in accordance with Embodiment 1, respectively.

As shown in FIG. 1, engine starting device 1 includes high-voltage (HV) power storage unit 11, DC/DC converter 13 electrically connected to high-voltage power storage unit 11, switching circuit 30 electrically connected to DC/DC converter 13, low-voltage (LV) power storage unit 15 electrically connected to switching circuit 30, starter 17 electrically connected to switching circuit 30, and controller 19 electrically connected to DC/DC converter 13 and switching circuit 30. A voltage of low-voltage power storage unit 15 is lower than that of high-voltage power storage unit 11.

As shown in FIG. 2, switching circuit 30 includes switch 41 having ends 45 and 47, and switch 43 having ends 49 and 51. Controller 19 controls switches 41 and 43 such that switch 41 connects and disconnects between end 45 and end 47 electrically, and switch 43 connects and disconnects between end 49 and end 51 electrically. End 47 of switch 41 is connected to end 49 of switch 43 at node 53. End 45 of switch 41 is connected to end 13A of DC/DC converter 13. End 51 of switch 43 is electrically connected to low-voltage power storage unit 15. Starter 17 is electrically connected to node 53. When driving starter 17, controller 19 turns off switch 43 and turns on only switch 41 out of switches 41 and 43, and controls DC/DC converter 13 to output electric power of high-voltage power storage unit 11 to starter 17. Subsequently, when a predetermined duration elapses or a rotation speed of starter 17 reaches the predetermined rotation speed, controller 19 turns on switch 43. Thus, the electric power of low-voltage power storage unit 15 is also controlled to be supplied to starter 17. Then, when engine 23 is completely started up, switches 41 and 43 are turned off.

Thus, even if DC/DC converter 13 has a small size, engine starting device 1 of a dual-power supply type which can start up engine 23 by driving starter 17 is obtained.

A configuration and an operation of engine starting device 1 in accordance with Embodiment 1 will be described.

As shown in FIG. 1, engine 23 for driving vehicle 21A is installed into body 21 of vehicle 21A. In accordance with Embodiment 1, engine 23 is mounted in the front part of body 21 and drives front wheels. Vehicle 21A is thus a vehicle of a front engine or a front drive (FF) type. Since a configuration for driving front wheels by engine 23 is the same as that of a vehicle of a typical FF type, its detail description is omitted. Note that, vehicle 21A is not limited to an FF type vehicle, but may be other drive configurations, such as a vehicle of a rear-wheel-drive type or a four-wheel drive type.

Motor 27 is connected to axle 25 on a rear wheel side of body 21. Motor 27 drives axle 25, and is rotated by axle 25 to generate electricity when vehicle 21A is decelerated, thus generating regeneration electric power. Therefore, motor 27 is configured to perform a powering operation and a regenerative operation. Motor 27 is not necessarily connected to axle 25, but may be connected to an axle of front wheels. Inverter 28 is electrically connected to motor 27. High-voltage storage unit 11 is electrically connected to inverter 28. The regenerative electric power generated by motor 27 is charged in high-voltage power storage unit 11 through inverter 28. Furthermore, motor 27 performs a powering operation via inverter 28 by using the electric power of high-voltage power storage unit 11. High-voltage power storage unit 11 is a lithium-ion battery with a rated charge voltage of 48V. High-voltage electricity storage unit 11 is not necessarily a lithium-ion battery, but may be another rechargeable battery or a capacitor. Further, the rated charge voltage is not necessarily 48V, but may be higher than or lower than 48V. If the rated charge voltage is too low, high current may flow to power body 21. Therefore, the rated charge voltage is preferably high.

High-voltage load 29 which can be driven by 48V is electrically connected to high-voltage power storage unit 11. High-voltage load 29 is mainly a load, such as an electric power steering, which consumes large electric power.

High-voltage electricity storage unit 11 is electrically connected to low-voltage power storage unit 15 via DC/DC converter 13 and switching circuit 30. Low-voltage storage unit 15 is a lead battery which has a low charge voltage of 12V. The voltage of low-voltage power storage unit 15 is thus lower than that of high-voltage power storage unit 11.

DC/DC converter 13 is a unidirectional step-down converter, and has end 13B serving as an input terminal and end 13A serving as an output terminal. According to Embodiment 1, DC/DC converter 13 steps down electric power of high-voltage power storage unit 11 connected to end 13B, and supplies the electric power to switching circuit 30 from end 13A.

Switching circuit 30 has a function that supplies at least one of electric power from DC/DC converter 13 and electric power from low-voltage power storage unit 15 to starter 17. Switching circuit 30 will be detailed later.

Low-voltage load 31 is electrically connected to low-voltage power storage unit 15. Low-voltage load 31 has lower power consumption than high-voltage load 29. Alternator 33 is electrically connected to low-voltage power storage unit 15.

DC/DC converter 13 and switching circuit 30 are electrically connected to controller 19. Controller 19 implemented by a microprocessor and a peripheral circuit, such as a memory, controls an output of DC/DC converter 13 and switches switching circuit 30. Controller 19 is also connected to various electrical components, such as engine 23, inverter 28, and alternator 33 since controller 19 entirely controls the vehicle besides the above.

A configuration of engine starting device 1 will be detailed below. In FIG. 2, thick lines denote power system wirings, and thin lines denote signal system wirings.

High-voltage electricity storage unit 11 is electrically connected to motor 27 via inverter 28 with power system wirings. High-voltage power storage unit 11 stores regeneration electric power generated by motor 27. High-voltage power storage unit 11 is controlled by inverter 28 to discharge the electric power stored therein when motor 27 performs power running.

Further, high-voltage power storage unit 11 is also connected to switching circuit 30 via DC/DC converter 13. A configuration of switching circuit 30 will be detailed below.

Switching circuit 30 includes switches 41 and 43 connected in series with each other, as shown in FIG. 2. Switch 41 is directly connected to end 13A of DC/DC converter 13 functioning as a positive electrode. End 51 of switch 43 is directly connected to a negative electrode of low-voltage power storage unit 15.

Specifically, end 13A of DC/DC converter 13 is connected to end 45 of switch 41. End 47 of switch 41 is connected to end 49 of switch 43 at node 53. End 51 of switch 43 is connected to the negative electrode of low-voltage power storage unit 15.

Switches 41 and 43 are turned on and off by an external signal, and implemented by relays according to Embodiment 1. Switches 41 and 43 are not necessarily implemented by relays, but may be implemented by solid state switches (e.g. field effect transistors).

Starter 17 is connected to node 53 at which end 47 of switch 41 is connected to end 49 of switch 43.

End 51 of switch 43 is also connected electrically to alternator 33. Respective negative electrodes of high-voltage power storage unit 11, DC/DC converter 13, inverter 28, starter 17, low-voltage power storage unit 15, and alternator 33 are connected to common ground 55.

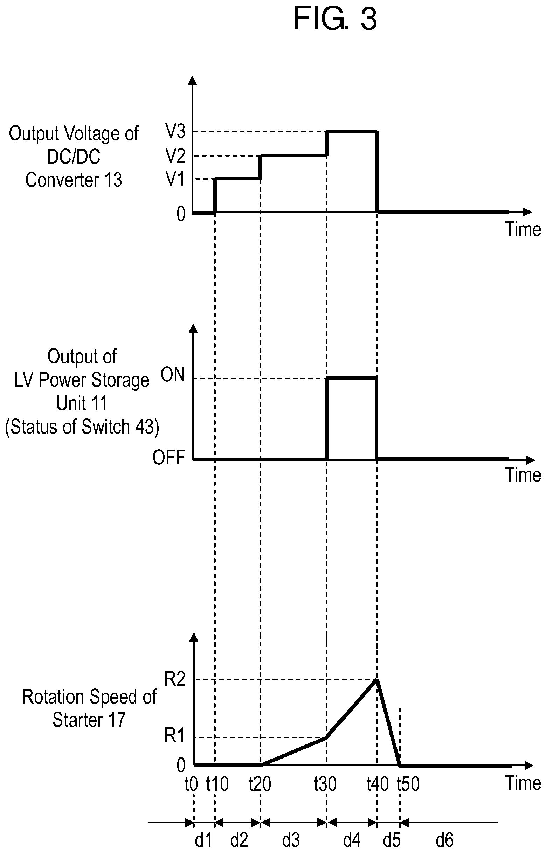

An operation of engine starting device 1 will be described below. FIG. 3 shows an output voltage at end 13A of DC/DC converter 13, an output of low-voltage power storage unit 15, i.e., a state of switch 43, and the rotation speed of starter 17 for the operation of engine starting device 1. FIG. 3 shows an operation of engine 23 at a cold starting.

Starter 17 does not rotate and engine 23 is stopped for duration d1 from time point t0 to time point t10. Therefore, switches 41 and 43 are turned off. Further, for duration d1, DC/DC converter 13 does not operate, and the output voltage at end 13A is 0V. The output voltage at end 13A of DC/DC converter 13 is a voltage at end 45 of switch 41 with respect to ground 55.

When a driver turns on an ignition switch of vehicle 21A at time point t10, a pinion of starter 17 is pushed out toward a ring gear fixed to a crankshaft of engine 23 for duration d2 from time point t10 to time point t20. An operation at this moment will be detailed below. When the ignition switch is turned on, controller 19 controls DC/DC converter 13 to output voltage V1 required for DC/DC converter 13 to push out the pinion from end 13A. At this moment, controller 19 turns on only switch 41 out of switches 41 and 43, and maintains switch 43 to be turned off. As a result, output voltage V1 of DC/DC converter 13 is applied to starter 17 via switch 41. Consequently, the pinion of starter 17 is pushed out. For duration d2, starter 17 does not rotate, as shown in FIG. 3, since the pinion is not completely pushed out toward the ring gear. Further, the electric power of low-voltage power storage unit 15 is not necessary for duration d2. Therefore, switch 43, i.e., the output of low-voltage power storage unit 15 is still turned off, as shown in FIG. 3.

The above operation for duration d2 of controller 19 causes DC/DC converter 13 to push out the pinion of starter 17. Therefore, the output voltage at end 13A of DC/DC converter 13 can be reduced to the minimum requited output voltage V1. As a result, the electric power output from DC/DC converter 13 can be reduced accordingly. Further, electric power discharged from low-voltage power storage unit 15 can be reduced.

Next, after the pinion is pushed out toward the ring gear and engaged with the ring gear at time point t20, controller 19 controls DC/DC converter 13 to start rotating starter 17 with the electric power of high-voltage power storage unit 11. Specifically, controller 19 turns on switch 41 and maintains switch 43 to be turned off, and increases the output voltage at end 13A of DC/DC converter 13 from output voltage V1 to output voltage V2 to rotate the starter 17 preliminarily. Consequently, when the pinion is pushed out toward the ring gear, a contactor built in starter 17 is turned on. Then, the rotation speed of starter 17 increases gradually and monotonically for duration d3 from time point t20 to time point t30, thus rotating the starter 17 preliminarily. At the preliminary rotation, although engine 23 rotates at a low speed, the rotation speed of starter 17 does not reach the rotation speed capable of starting up engine 23. Therefore, a current flowing through DC/DC converter 13 for duration d3 is still small. Duration d3 from time point t20 to time point t30 is predetermined based on actual measurement, and stored in a memory (controller 19).

Next, as shown in FIG. 3, when the rotation speed of starter 17 reaches a predetermined rotation speed R1 at time point t30, controller 19 operates as follows.

First, controller 19 controls DC/DC converter 13 to output voltage V3 from end 13A at time point t30. Output voltage V3 is a voltage that is combined with the electric power of low-voltage power storage unit 15 to rotate starter 17 at the maximum speed. Output voltage V3 is predetermined based on actual measurement, and stored in a memory (controller 19).

At time point t30, controller 19 turns on switch 43, and maintains both switches 41 and 43 to be turned on for duration d4 from time point t30 to time point t40. Consequently, as shown in FIG. 3, the output of low-voltage power storage unit 15 to starter 17 is turned on, and electric power is also supplied to starter 17 from low-voltage power storage unit 15. Thus, starter 17 receives the electric power from high-voltage power storage unit 11 via DC/DC converter 13 and the electric power from low-voltage power storage unit 15. As a result, starter 17 operates with two power sources. Thus, the power sources, i.e., high-voltage power storage unit 11 and low-voltage power storage unit 15 are prevented from discharging electric power while driving starter 17. Therefore, the current flowing through DC/DC converter 13 can be reduced. Further, low-voltage power storage unit 15 (a lead battery) is also prevented from discharging electric power, hence preventing the occurrence of sulfation due to overcurrent and increasing its life time. Thus, for durations d2, d3, and d4 from time point t10 to time point t40, the electric power from high-voltage power storage unit 11 is supplied to starter 17 via DC/DC converter 13. For duration d4, the electric power from low-voltage power storage unit 15 is supplied to starter 17 in addition to the electric power from high-voltage power storage unit 11.

Since starter 17 rotates at the maximum speed for duration d4 from time point t30 to time point t40, the rotation speed of starter 17 gradually increases with respect to time monotonically until time point t40, as shown in FIG. 3, and reaches the maximum rotation speed R2 at time point t40. The rotation at the rotation speed R2 satisfies conditions for starting up engine 23. Thus, controller 19 performs fuel injection and ignition to engine 23 at time point t40. Consequently, engine 23 is completely started up at time point t40.

Subsequently, in order to stop starter 17, controller 19 stops DC/DC converter 13 while turning off both switches 41 and 43 at time point t40. As a result, the pinion is removed from the ring gear since electric power supply to starter 17 is stopped. Therefore, the rotation speed of starter 17, as shown in FIG. 3, decreases rapidly for duration d5 from time point t40 to time point t50, and starter 17 is stopped at time point t50. For duration d6 after time point t50, switches 41 and 43 are turned off, and DC/DC converter 13 is stopped.

The above operation reduces the current flowing from high-voltage power storage unit 11 and low-voltage power storage unit 15 to DC/DC converter 13 for durations d2, d3, and d4 from time point t10 to time point t40 at which the engine is started up. As a result, DC/DC converter 13 does not need to deliver a large current, hence having a small size. Furthermore, electric power discharged from low-voltage power storage unit 15 is reduced when starter 17 is driven. This operation prevents deterioration of its charging state, hence providing low-voltage power storage unit 15 with a long life time.

Even if the DC/DC converter has a small size, engine starting device 1 of a two power supply system can start up engine 23 by driving starter 17.

According to Embodiment 1, upon determining that the rotation speed of starter 17 reaches the predetermined rotation speed R1, controller 19 turns on switch 43 and controls DC/DC converter 13 to output voltage V3. The controller does not necessarily determine that the rotation speed of starter 17 reaches the predetermined rotation speed R1, but may determine that a predetermined duration elapses from time point t20. That is, at time point t30 when the predetermined duration elapses from time point t20, controller 19 may turn on switch 43 and control DC/DC converter 13 to output voltage V3. In this case, DC/DC converter 13 may have a small size. In addition to this, there is no need to measure the rotation speed of starter 17, thereby simplifying its configuration and control. A duration until starter 17 reaches the predetermined rotation speed R3 may be evaluated in advance as the predetermined duration, and stored in the memory (controller 19).

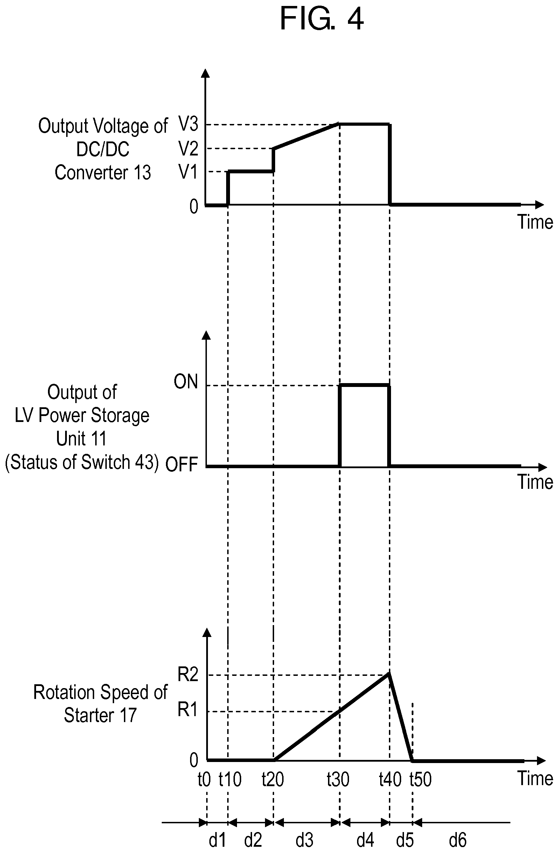

FIG. 4 shows the rotation speed of starter 17, an output voltage at end 13A of DC/DC converter 13, an output of low-voltage power storage unit 15, i.e., a state of switch 43 in another operation of engine starting device 1 according to Embodiment 1.

In the operation shown in FIG. 4, controller 19 gradually increases the output voltage of DC/DC converter 13 with respect to time while turning off switch 43 and maintaining only switch 41 to be turned on.

Thus, the rotation speed of starter 17 in the preliminary rotation can be gradually increased, so that a change in the rotation speed is reduced until starter 17 rotates at the maximum speed, thereby allowing engine starting device 1 to reduce burdens imposed on starter 17.

The operation shown in FIG. 4 will be described below.

In FIG. 4, the operation for durations d1 and d2 from time point t0 to time point t20 is the same as the operation for durations d1 and d2 shown in FIG. 3.

At time point t20, controller 19 controls DC/DC converter 13 such that the output voltage at end 13A of DC/DC converter 13 is increased with respect to time gradually and monotonically while turning on only switch 41 out of switches 41 and 43. As a result, as shown in FIG. 4, the changing rate of the rotation speed of starter 17 for duration d3 from time point t20 to time point t30, i.e., an inclination of the rotation speed of starter 17 with respect to time can be adjusted optionally. In the operation shown in FIG. 4, controller 19 controls the change rate of the rotation speed of starter 17 for duration d3, i.e., the inclination of the rotation speed of starter 17 with respect to time to be identical to the changing rate of the rotation speed for duration d4 from time point t30 to time point t40 until starter 17 rotates at the maximum full speed, i.e., an inclination of the rotation speed with respect to time. The inclination of the rotation speed for duration d3 from time point t20 to time point t30 is evaluated in advance based on practical measurement data, and stored in the memory (controller 19). Controller 19 controls the output voltage of DC/DC converter 13 such that the inclination of the rotation speed of starter 17 is identical to the stored inclination. Consequently, the output voltage of DC/DC converter 13 for duration d3 from time point t20 to time point t30 is controlled to increase from output voltage V2 to output voltage V3 linearly and gradually monotonically.

Next, controller 19 maintains output voltage V3 of DC/DC converter 13 while turning on switch 43 at time point t30. As a result, as shown in FIG. 4, the output of low-voltage power storage unit 15 to starter 17 is turned on so as to supply the electric power from high-voltage power storage unit 11 and the electric power from low-voltage power storage unit 15 to starter 17. Output voltage V3 is a voltage for rotating starter 17 at the maximum speed. Therefore, the rotation speed of starter 17 continuously increases from time point t30 towards time point t40, as shown in FIG. 4. At this moment, output voltage at end 13A of DC/DC converter 13 is adjusted such that the inclination of the rotation speed with respect to time for duration d4 from time point t20 to time point t30 is substantially identical, within an error range, to the inclination of the rotation speed with respect to time for duration d3 from time point t30 to time point t40. Thus, the rotation speed linearly increases from rotation speed 0 to rotation speed R2. Thus, for durations d2, d3, and d4 from time point t10 to time point t40, the electric power from high-voltage power storage unit 11 is supplied to starter 17 via the DC/DC converter. For duration d4, the electric power from low-voltage power storage unit 15 is also supplied to starter 17 in addition to the electric power from high-voltage power storage unit 11.

Since the operation after time point t40 shown in FIG. 4 is the same as the operation shown in FIG. 3, detailed description thereof is omitted.

With the above configuration and operation, in the operation shown in FIG. 4, electric power is supplied to starter 17 fundamentally similarly to the operation shown in FIG. 3. Therefore, DC/DC converter 13 controls the rotation speed of starter 17 not to suddenly change while DC/DC converter 13 has a small size. This allows engine starting device 1 to reduce a load on starter 17.

In the operation shown in FIG. 4, the output voltage at end 13A of DC/DC converter 13 increases with respect to time linearly and gradually monotonically for duration d3 from time point t20 to time point t30, i.e., for a duration in which only switch 41 out of switches 41 and 43 is turned on. However, this is not limited to the operation of increasing the output voltage linearly, but may be an operation of increasing the output voltage nonlinearly and gradually. In this case, for example, if the rotation speed of starter 17 changes according to a quadratic function, unexpected change in the rotation speed of starter 17 is prevented.

In engine starting device 100 of the conventional control device for vehicles shown in FIG. 6, PTL 1 discloses that a voltage applied to starter 103 is variable not depending on environmental factors, such as temperature, and the rotation speed of starter 103 is constant. In the configuration shown in FIG. 6, low-voltage battery 111 constantly supplies electric power to starter 103 when starter 103 is driven. Consequently, the current flowing through DC/DC converter 113 is smaller than the case where 100% of electric power from high-voltage battery 109 is supplied to starter 103 via DC/DC converter 113. However, for example, in the case where low-voltage battery 111 has a large internal resistance at low temperature, DC/DC converter 113 is necessary to flow a high current of approximately 100A in order to compensate deterioration in electric discharge capability of low-voltage battery 111. Therefore, DC/DC converter 113 has a large size to satisfy the large-current requirement.

In engine starting device 1 according to Embodiment 1 shown in FIGS. 1 to 4, controller 19, at first, turns on only switch 41 out of switches 41 and 43, and controls DC/DC converter 13 to output the electric power of high-voltage power storage unit 11 to starter 17 when starting up starter 17. When a predetermined duration elapses from a certain time at which starter 17 starts rotating, or when the rotation speed of starter 17 reaches a predetermined rotation speed, controller 19 turns on switch 43 to supply the electric power of low-voltage power storage unit 15 to starter 17 additionally. Consequently, the electric power of high-voltage power storage unit 11 which performs preliminary rotation of starter 17 is reduced to be small. Furthermore, the preliminary rotation has already be carried out before starter 17 is rotated at the maximum speed, thereby reducing electric power required to start as compared with the case where starter 17 rotates at the maximum speed immediately from its stopped state. The electric power of low-voltage power storage unit 15 is supplied to starter 17 in addition to the electric power of high-voltage power storage unit 11, thereby reducing the current flowing through DC/DC converter 13.

For these reasons, even if DC/DC converter 13 has a small size, engine starting device 1 of a two power supply system can start up engine 23 by driving starter 17.

### EXEMPLARY EMBODIMENT 2

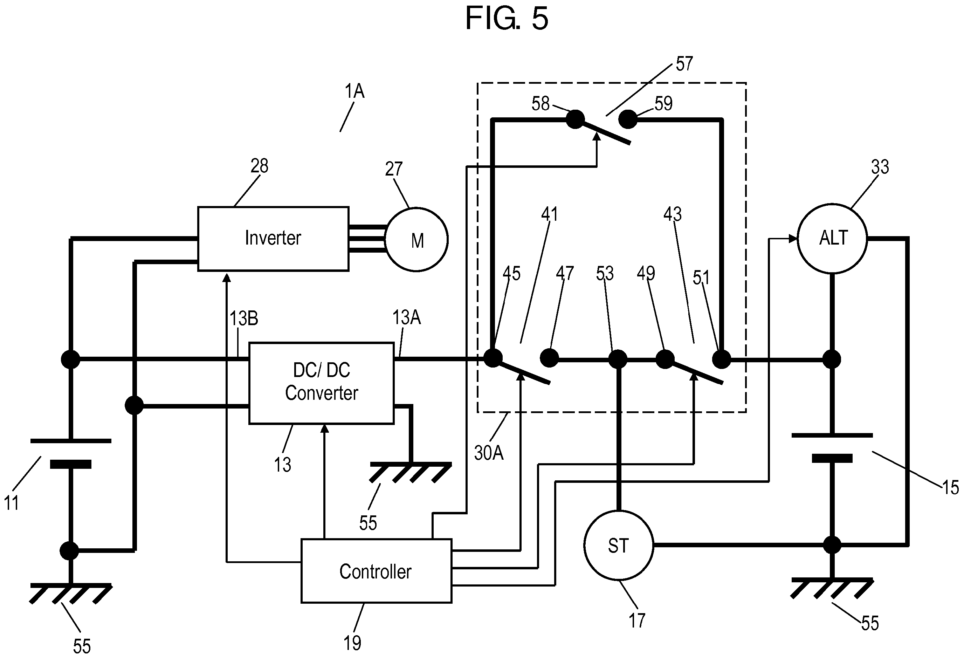

FIG. 5 is a block circuit diagram of engine starting device 1A according to Exemplary Embodiment 2. In FIG. 5, components identical to those of engine starting device 1 according to Embodiment 1 shown in FIGs. 1 and 2 are denoted by the same reference numerals. Engine starting system 1A according to Embodiment 2 includes switching circuit 30A instead of switching circuit 30 of engine starting device 1 according to Embodiment 1 shown in FIGs. 1 and 2. Switching circuit 30A further includes switch 57 electrically connected between end 45 of switch 41 and end 51 of switch 43 in switching circuit 30 shown in FIG. 2. Specifically, switch 57 has ends 58 and 59. End 58 of switch 57 is connected to end 45 of switch 41 while and end 59 of switch 57 is connected to end 51 of switch 43. Controller 19 controls switch 57 to connect and disconnect between ends 58 and 59 of switch 57 electrically.

In engine starting device 1A according to Embodiment 2, controller 19 controls DC/DC converter 13 to exchange electric power between high-voltage power storage unit 11 and low-voltage power storage unit 15 to start up starter 17 while turning on switch 57 before starter 17 is started up.

Thus, since electric power is more reliably supplied from two power sources when engine 23 is started up, only high-voltage power storage unit 11 is less likely to supply electric power via DC/DC converter 13 to start up starter 17. Accordingly, a large current is prevented from flowing through DC/DC converter 13, thereby providing DC/DC converter 13 with a small size.

Engine starting device 1A according to Embodiment 2 will be detailed below.

A relay is used as switch 57 like switches 41 and 43. Switch 57 is not necessarily implemented by a relay, but may be implemented by another switch, such as a semiconductor switch.

In engine starting device 1A according to Embodiment 2, switching circuit 30A includes switches 41, 43, and 57.

As described above, to exchange electric power between high-voltage power storage unit 11 and low-voltage power storage unit 15, a bi-directional type of DC/DC converter is used as DC/DC converter 13 of engine starting device 1A according to Embodiment 2. That is, DC/DC converter 13 drops the voltage (end 13B) of high-voltage power storage unit 11 to supply electric power to low-voltage power storage unit 15 (end 13A), and boosts the voltage (end 13A) of low-voltage power storage unit 15 to supply electric power to high-voltage power storage unit 11 (end 13B).

An operation of engine starting device 1A will be described below. In the stage where engine 23 is not started up and before an ignition switch is turned on, i.e., when a door key of vehicle 21A is unlocked or a door of vehicle 21A is opened, controller 19 extracts a remaining charge from a memory. Herein, the remaining charge is an amount of electric power accumulated in each of high-voltage power storage unit 11 and low-voltage power storage unit 15. The remaining charge is evaluated by calculating charge and discharge current integration of high-voltage power storage unit 11 and low-voltage power storage unit 15 through controller 19, and is stored in the memory.

If the remaining charge of each of high-voltage power storage unit 11 and low-voltage power storage unit 15 has sufficient electric power to drive starter 17 by high-voltage power storage unit 11 and low-voltage power storage unit 15, controller 19 maintains switch 57 to be turned off, and waits until an ignition switch is turned on.

On the other hand, if the remaining charge of either one of high-voltage power storage unit 11 and low-voltage power storage unit 15 is insufficient to drive starter 17 and the other remaining charge is sufficient, controller 19 supplies electric power from the storage unit with the sufficient remaining charge to the storage unit with the insufficient remaining charge to exchange electric power.

First, an operation in the case where high-voltage power storage unit 11 has a sufficient remaining charge and low-voltage power storage unit 15 has an insufficient remaining charge will be described below. In this case, although only high-voltage power storage unit 11 can drive starter 17, DC/DC converter 13 is required to have a large capacity since a large current flows through DC/DC converter 13. In engine starting device 1A, controller 19 turns on switch 57 while switches 41 and 43 are turned off. As a result, high-voltage power storage unit 11 and low-voltage power storage unit 15 are electrically connected via DC/DC converter 13. Next, controller 19 controls DC/DC converter 13 to supply the electric power of high-voltage power storage unit 11 to charge low-voltage power storage unit 15 through DC/DC converter 13. That is, controller 19 drops the voltage at end 13B, i.e., the voltage of high-voltage power storage unit 11 to output electric power from end 13A and supply it to low-voltage power storage unit 15. Thus, the electric power sufficient to drive starter 17 can be stored previously in both high-voltage power storage unit 11 and low-voltage power storage unit 15. Subsequently, when electric power is completely exchanged to drive starter 17 between high-voltage power storage unit 11 and low-voltage power storage unit 15, controller 19 turns off switch 57 and waits until the ignition switch is turned on.

Next, an operation in the case where high-voltage power storage unit 11 has an insufficient remaining charge and low-voltage power storage unit 15 has a sufficient remaining charge will be described below. In this case, although only low-voltage power storage unit 15 can drive starter 17, a large current flows from low-voltage power storage unit 15 and the remaining charge thereof is rapidly reduced. This may shorten the life of low-voltage power storage unit 15. In engine starting device 1A, controller 19 firstly turns on switch 57 while switches 41 and 43 are turned off similarly to above. As a result, high-voltage power storage unit 11 and low-voltage power storage unit 15 are electrically connected via DC/DC converter 13. Next, controller 19 controls DC/DC converter 13 to supply the electric power of low-voltage power storage unit 15 to charge high-voltage power storage unit 11 through DC/DC converter 13. Controller 19 boosts the voltage at end 13A, i.e., the voltage of low-voltage power storage unit 15 to supply electric power from end 13B to high-voltage power storage unit 11. Thus, the electric power sufficient to drive starter 17 can be stored previously in both high-voltage power storage unit 11 and low-voltage power storage unit 15. Subsequently, when electric power is completely exchanged to drive starter 17 between high-voltage power storage unit 11 and low-voltage power storage unit 15, controller 19 turns off switch 57 and waits until the ignition switch is turned on.

In the case where the sum of the remaining charges of high-voltage power storage unit 11 and low-voltage power storage unit 15 is insufficient to drive starter 17, the engine starting device informs the driver that the remaining charges of high-voltage power storage unit 11 and low-voltage power storage unit 15 run short. The subsequent operation after the above (operation after an ignition switch is turned on) is performed similarly to the operation of engine starting device 1 according to Embodiment 1, as shown in FIG. 3 or 4.

With the above configuration and operation of engine starting device 1A, even if either one of high-voltage power storage unit 11 and low-voltage power storage unit 15 has an insufficient remaining charge, electric power can be exchanged from the other one. Thus, high-voltage power storage unit 11 and low-voltage power storage unit 15 can more reliably drive starter 17. As a result, the life of low-voltage power storage unit 15 can be prolonged while DC/DC converter 13 has a small size.

Engine starting device 1A according to Embodiment 2 starts exchanging electric power when a door is unlocked or a door is opened. However, if one of high-voltage power storage unit 11 and low-voltage power storage unit 15 has a relatively small remaining charge, the exchanging of electric power may not be completed for a duration from the time when a door lock is unlocked or a door is opened to the time when the ignition switch is turned on. In this case, controller 19 may inform a driver that electric power is not completely exchanged, and permit the ignition switch to be turned on after electric power is completely exchanged.

Further, if the time at which vehicle 21A is used is decided, the exchanging of electric power may be started from a previous time to the decided time with a timer as necessary.

Furthermore, controller 19 may learn and store the time at which vehicle 21A is used.

In engine starting devices 1 and 1A according to Embodiments 1 and 2, a cold-start operation of engine 23 is described. However, engine starting devices 1 and 1A may be mounted in vehicle 21A having a stop-idling function and applied to a hot-start operation of engine 23 after stopping idling.

In engine starting devices 1 and 1A according to Embodiments 1 and 2, switch 43 may be replaces with a magnet switch built in starter 17, thereby simplifying the configurations of engine starting devices 1 and 1A.

### INDUSTRIAL APPLICABILITY

An engine starting device according to the present invention provides a DC/DC converter to have a small size, and is especially useful as an engine starting device of a two power supply system, or the like.

### REFERENCE MARKS IN THE DRAWINGS

- 1,1A: engine starting device
- 11: high-voltage power storage unit
- 13: DC/DC converter
- 15: low-voltage power storage unit
- 17: starter
- 19: controller
- 23: engine
- 41: switch (first switch)
- 43: switch (second switch)
- 53: node
- 57: switch (third switch)

## Claims

1. An engine starting device (1) for starting up an engine, the engine starting device comprising:
a high-voltage power storage unit (11);
a DC/DC converter (13) electrically connected to the high-voltage power storage unit (11);
a first switch (41) having a first end (45) and a second end (47), the first end (45) of the first switch (41) being electrically connected to the DC/DC converter (13);
a second switch (43) having a first end (49) and a second end (51), the first (49) end of the second switch (43) being electrically connected to the second end (47) of the first switch (41) at a node (53);
a low-voltage power storage unit (15) electrically connected to the second end (51) of the second switch (43), the low-voltage power storage unit (15) having a lower voltage than the high-voltage power storage unit (11);
a starter (17) electrically connected to the node (53) for starting up the engine; and
a controller (19) electrically connected to the DC/DC converter (13), the first switch (41), and the second switch (43),
wherein the controller (19) is configured to:
for starting up the starter, control the DC/DC converter (13) to allow the DC/DC converter (13) to output electric power of the high-voltage power storage unit (11) to the starter (17) and to start rotating the starter (17) at a certain time point by turning on the first switch (41) while turning off the second switch (43),
when a predetermined duration elapses from the certain time point or a rotation speed of the starter (17) reaches a predetermined rotation speed, control the second switch (43) to supply electric power of the low-voltage power storage unit (15) to the starter (17) together with the electric power of the high-voltage power storage unit (11) by turning on the second switch (43); and
turn off the first switch (41) and the second switch (43) when the engine completely starts up,
**characterized in that**
the controller (19) is further configured to increase an output voltage of the DC/DC converter (13) with respect to time when the first switch (41) is turned on while the second switch (43) is turned off.

2. The engine starting device (1) according to claim 1, further comprising
a third switch (57) electrically connected between the first end (45) of the first switch (41) and the second end (51) of the second switch (43),
wherein the controller (19) is configured to turn on the third switch (57) before starting up the starter (17) and control the DC/DC converter (13) to exchange electric power between the high-voltage power storage unit (11) and the low-voltage power storage unit (15) such that the starter (17) can be started up.

## Patentansprüche

1. Motorstartvorrichtung (1) zum Starten eines Motors, wobei die Motorstartvorrichtung Folgendes umfasst:
eine Hochspannungs-Stromspeichereinheit (11);
einen DC/DC-Wandler (13), der mit der Hochspannungs-Stromspeichereinheit (11) elektrisch verbunden ist;
einen ersten Schalter (41) mit einem ersten Ende (45) und einem zweiten Ende (47), wobei das erste Ende (45) des ersten Schalters (41) mit dem DC/DC-Wandler (13) elektrisch verbunden ist;
einen zweiten Schalter (43) mit einem ersten Ende (49) und einem zweiten Ende (51), wobei das erste (49) Ende des zweiten Schalters (43) mit dem zweiten Ende (47) des ersten Schalters (41) an einem Knoten (53) elektrisch verbunden ist;
eine Niederspannungs-Stromspeichereinheit (15), die mit dem zweiten Ende (51) des zweiten Schalters (43) elektrisch verbunden ist, wobei die Niederspannungs-Stromspeichereinheit (15) eine niedrigere Spannung als die Hochspannungs-Stromspeichereinheit (11) aufweist;
einen Anlasser (17), der mit dem Knoten (53) elektrisch verbunden ist, um den Motor zu starten; und
eine Steuerung (19), die mit dem DC/DC-Wandler (13), dem ersten Schalter (41) und dem zweiten Schalter (43) elektrisch verbunden ist,
wobei die Steuerung (19) so konfiguriert ist, dass sie:
zum Starten des Anlassers den DC/DC-Wandler (13) so steuert, dass der DC/DC-Wandler (13) elektrische Energie der Hochspannungs-Stromspeichereinheit (11) an den Anlasser (17) abgibt und den Anlasser (17) zu einem bestimmten Zeitpunkt durch Einschalten des ersten Schalters (41) drehen kann, während der zweite Schalter (43) ausgeschaltet wird,
wenn eine vorbestimmte Dauer ab dem bestimmten Zeitpunkt vergeht oder eine Drehgeschwindigkeit des Anlassers (17) eine vorbestimmte Drehgeschwindigkeit erreicht, den zweiten Schalter (43) so steuert, dass er elektrische Energie der Niederspannungs-Stromspeichereinheit (15) zusammen mit der elektrischen Energie der Hochspannungs-Stromspeichereinheit (11) durch Einschalten des zweiten Schalters (43) an den Anlasser (17) abgibt; und
den ersten Schalter (41) und den zweiten Schalter (43) ausschaltet, wenn der Motor vollständig startet,
**dadurch gekennzeichnet, dass**
die Steuerung (19) ferner so konfiguriert ist, dass sie eine Ausgangsspannung des DC/DC-Wandlers (13) in Bezug auf den Zeitpunkt erhöht, wenn der erste Schalter (41) eingeschaltet wird, während der zweite Schalter (43) ausgeschaltet wird.

2. Motorstartvorrichtung (1) nach Anspruch 1, ferner umfassend
einen dritten Schalter (57), der zwischen dem ersten Ende (45) des ersten Schalters (41) und dem zweiten Ende (51) des zweiten Schalters (43) elektrisch verbunden ist,
wobei die Steuerung (19) so konfiguriert ist, dass sie den dritten Schalter (57) vor dem Starten des Anlassers (17) einschaltet und den DC/DC-Wandler (13) so steuert, dass er elektrische Energie zwischen der Hochspannungs-Stromspeichereinheit (11) und der Niederspannungs-Stromspeichereinheit (15) austauscht, so dass der Anlasser (17) gestartet werden kann.

## Revendications

1. Dispositif de démarrage de moteur thermique (1) destiné à démarrer un moteur thermique, le dispositif de démarrage de moteur thermique comprenant :
une unité de stockage d'énergie à haute tension (11) ;
un convertisseur courant continu-courant continu (13) électriquement connecté à l'unité de stockage d'énergie à haute tension (11) ;
un premier interrupteur (41) comportant une première extrémité (45) et une seconde extrémité (47), la première extrémité (45) du premier interrupteur (41) étant électriquement connectée au convertisseur courant continu-courant continu (13) ;
un deuxième interrupteur (43) comportant une première extrémité (49) et une seconde extrémité (51), la première extrémité (49) du deuxième interrupteur (43) étant électriquement connectée à la seconde extrémité (47) du premier interrupteur (41) au niveau d'un nœud (53) ;
une unité de stockage d'énergie à basse tension (15) électriquement connectée à la seconde extrémité (51) du deuxième interrupteur (43), l'unité de stockage d'énergie à basse tension (15) ayant une tension plus basse que l'unité de stockage d'énergie à haute tension (11) ;
un démarreur (17) électriquement connecté au nœud (53) pour démarrer le moteur thermique ; et
un dispositif de commande (19) électriquement connecté au convertisseur courant continu-courant continu (13), au premier interrupteur (41) et au deuxième interrupteur (43),
dans lequel le dispositif de commande (19) est conçu pour :
démarrer le démarreur, commander le convertisseur courant continu-courant continu (13) afin de permettre au convertisseur courant continu-courant continu (13) de délivrer de l'énergie électrique de l'unité de stockage d'énergie à haute tension (11) au démarreur (17) et de commencer la rotation du démarreur (17) à un certain point temporel en mettant à l'état passant le premier interrupteur (41) tout en mettant à l'état bloqué le deuxième interrupteur (43),
lorsqu'une durée prédéterminée s'est écoulée à partir du certain point temporel ou qu'une vitesse de rotation du démarreur (17) atteint une vitesse de rotation prédéterminée, commander le deuxième interrupteur (43) pour fournir l'énergie électrique de l'unité de stockage d'énergie à basse tension (15) au démarreur (17) conjointement avec l'énergie électrique de l'unité de stockage d'énergie à haute tension (11) en mettant le deuxième interrupteur (43) à l'état passant ; et
mettre le premier interrupteur (41) et le deuxième interrupteur (43) à l'état bloqué lorsque le moteur thermique démarre complètement,
**caractérisé en ce que** :
le dispositif de commande (19) est conçu en outre pour accroître une tension de sortie du convertisseur courant continu-courant continu (13) par rapport au temps lorsque le premier interrupteur (41) est mis à l'état passant tandis que le deuxième interrupteur (43) est mis à l'état bloqué.

2. Dispositif de démarrage de moteur thermique (1) selon la revendication 1, comprenant en outre :
un troisième interrupteur (57) électriquement connecté entre la première extrémité (45) du premier interrupteur (41) et la seconde extrémité (51) du deuxième interrupteur (43),
dans lequel le dispositif de commande (19) est conçu pour mettre à l'état passant le troisième interrupteur (57) avant de démarrer le démarreur (17) et pour commander le convertisseur courant continu-courant continu (13) afin d'échanger de l'énergie électrique entre l'unité de stockage d'énergie à haute tension (11) et l'unité de stockage d'énergie à basse tension (15), de manière que le démarreur (17) puisse être démarré.
